# EUROPEAN PATENT APPLICATION

(11) **EP 1 535 835 A1**
(43) Date of publication of application: **01.06.2005**
(21) Application number: 03396106.1
(22) Date of filing: 25.11.2003
(51) Int. Cl.: B64C 3/50, B63H 1/36, B63H 9/06

(54) **Wing structure and its applications**

(71) Applicant: Rautio, Aaro, 65410 Sundom (FI); Kallio, Armas, 26101 Rauma (FI)
(72) Inventor: Rautio, Aaro, 65410 Sundom (FI); Kallio, Armas, 26101 Rauma (FI)
(74) Representative: Suominen, Kaisa Liisa

(57) **Abstract**

The invention comprises a wing structure (1) and several applications of it. The wing structure (1) comprises first and second wing portions (2, 3) and an intermediate portion (4), to which the wing portions are pivotally hinged in order to change the shape of the wing structure (1). The wing portions (2, 3) are substantially rigid structures.

## Description

The object of the invention is a wing structure and its applications presented in the preambles of the independent claims presented below. The invention relates particularly to a new wing structure having a variable profile. The invention relates also to a number of applications of this wing structure, such as a keel, rudder, sail, flipper, thrust member for a watercraft, aircraft and power plant.

### Prior art

As such it is known to vary a profile of a wing. For instance, Australian patent application AU-A-656380 presents a wing, which is intended to be used for instance in keel or rudder of a boat, and which due to the pressures acting in a liquid will vary its cross-section profile. The wing presented in the publication comprises an outer shell made of a flexible material, which enables bending of the wing. US patent 4,341,176 presents a wing-like structure comprising an outer shell made of flexible material and rigid support components arranged within this outer shell, whereby the profile of the wing-like structure can be varied by changing the position of these supports. German patent application DE 3104750 A presents a wing-like structure comprising a rear portion and connected to it a front portion, which is pivotal in relation to the rear portion. The profile of the cross-section can be varied by turning the front portion in relation to the rear portion. The publication WO 94/21914 presents a solution combining a stationary front portion and a rear portion made of a flexible material. Then the profile of the wing-like structure can be varied by turning the front portion and/or by stretching the flexible rear portion. In addition, mechanical solutions are known, where the profile of the wing structure can be varied by moving one or more surfaces of the wing structure. Such mechanical solutions have been presented for instance in the patent applications US 3,806,065 and GB 163,853. Solutions have been developed for flippers using solutions, where the profile varies according to the direction of the kick. For instance, the patent US 4,209,866 presents flippers comprising a wing-like member, which is arranged to pivot about an axis in order to vary the profile of the wing-like member according to the direction of the kick.

The solutions mentioned above are complicated, and they can vary the wing profile only in a limited manner.

### Description of the invention

The object of the present invention is to reduce or even to eliminate the above described problems occurring in the prior art.

An object of the present invention is particularly to provide a wing structure, which operates more reliably, which is more economical and easier to manufacture, and which is easier to use than former wing structures with a variable shape.

In order to attain i.a. the objects mentioned above the wing structure according to the invention and its applications are characterised in what is presented in the characterising parts of the enclosed independent claims.

The embodiment examples and the advantages mentioned in this text relate in suitable parts both to a wing structure according to the invention and to different applications of the wing structure, such as a keel, rudder, sail, flipper, thrust member for a watercraft, aircraft and power plant, even if this would not be always expressly mentioned.

A typical wing structure according to the invention comprises
- a first wing portion having a first wing surface
- a second wing portion having a second wing surface, and
- an intermediate portion, to which the first and second wing portions are attached.
In order to vary the shape of the wing structure the first and second wing portions are pivotally attached to the intermediate portion. The first wing portion is pivotally attached to the intermediate portion with a first hinge and the second wing portion is pivotally attached to the intermediate portion with a second hinge. With the aid of this solution the wing portions are supported on the intermediate portion and arranged to be movable in relation each other. Typical first and second wing portions according to the invention have a substantially rigid structure.

The wing structure is intended to be used in connection with a medium, such as water or air. Wing surface means the external surface of the wing portion, i.e. that surface which at least mainly directly contacts the medium during the use of the wing structure. Typically, the shape and structure of the wing surface will cause an interaction between the wing structure and the medium, in which the wing structure is located.

Substantially rigid means that the wing surface of the wing portion does hardly bend or otherwise change its shape as the wing structure is used according to the invention. Such a wing portion is advantageously a single body, for instance bent into shape of one metal sheet, or one integral moulded plastic piece. A wing portion can be made of several pieces fastened to each other. Then such pieces are fastened to each other so that they will not move in relation to each other. Of course a substantially rigid wing portion according to the invention can slightly bend during use. However, the bending of the wing portion is insignificant and typically undesirable. Suitable materials for making rigid wing portions are for instance different metals, such as aluminium and steel, wood, many different plastics, combinations of different materials, such as fibre reinforced materials, for instance carbon fibre or fibreglass reinforced plastics.

The surface structures of the wing portions and the intermediate portion are typically made of a sheet-like material. The thickness of the sheet is typically such that the wing structure will withstand the normal intended use. The thickness of the sheet-like material can be for instance 0.5 to 50 mm, 1 to 50 mm, 0.5 to 20 mm, 1 to 20 mm, 0.5 to 10 mm, 1 to 10 mm, 1 to 5 mm, or 1 to 2 mm. Possible typical material thickness values are also for instance 1 mm, 2 mm, 3 mm, 4 mm, 5 mm, 6 mm, 7 mm, 8 mm, 9 mm, 10 mm, 20 mm, 30 mm, 40 mm and 50 mm.

In an application of the invention the rigidity according to the invention is defined so that in the cross section of the wing structure we determine a front edge point and a rear edge point of the wing surface of the wing portion. Let the straight line between these points be the longitudinal axis. In a standby state, in other words without any stress caused by the medium or other external stress to the wing structure, let us measure the perpendicular distance between different points of the wing surface of the unused wing portion and the longitudinal axis, for instance in NTP conditions. Let that point be the vertex, which has the greatest perpendicular distance to the longitudinal axis. In the same conditions, let us then measure again the same distance when the wing structure according to the invention is handled so that its wing portions perform a movement from one extreme end of their path to the other. During this movement of a substantially rigid wing portion the perpendicular distance between the vertex of the wing surface and the longitudinal axis will typically change less than 50 %, preferably less than 25 %, more preferably less than 10 %, advantageously less than 5 %, still more advantageously less than 2 %, and still more advantageously less than 1 %. Advantageous variation ranges for the distance measured in the same conditions between said vertex and the perpendicular longitudinal axis are 5 to 2 %, 5 to 1 %, 2 to 1 % or 2 to 0 %.

The intermediate portion has advantageously an external surface, which like the wing portions is substantially rigid in normal conditions of use. However, the intermediate portion can be arranged in several different ways. Typically it can be made of the same material as the wing portions. If the external surface of the intermediate portion during use will come into direct contact with the medium it is usually advantageous that the joints between the external surface of the intermediate portion and the wing surfaces of the wing portions are as smooth as possible, i.e. streamlined.

In this context a hinge joining the wing portions and the intermediate portion means any member, which enables the two portions joined by the hinge to perform a controlled and repeated pivotal motion in relation to each other. The hinge can be for instance a swivel or an elastic means joining the wing portions and the intermediate portion, such as a piece of a rubber mat.

The main advantage of the invention is that it is simple. This results in a reliable operation and cost advantages. The rigid wing portions and the intermediate portion can easily be made to move in relation to each other with the aid of few moving components. In the minimum case one hinge between the respective parts is sufficient. The wing structures according to the invention can be easily made very durable. With the solution according to the invention it is easy to control the shape of the wing and thus the interaction between the wing and the medium surrounding it, such as water or air.

A wing portion with a substantially invariable shape has the advantage that its shape and thus the effect on the surrounding medium, such as water or air, can be reliably predicted. A wing structure in a certain position has always a generally similar or even exactly the same aerodynamic or hydrodynamic effect. If a substantial part of the wing portion is of an easily deformable material, then its varying characteristics cause troubles and at least uncertainty in the use of the wing structure. It is conceivable that a small part of a wing portion according to the invention also could be of deformable material. For instance a part of the wing portion could be made of elastic rubber.

When the wing portions of a wing structure according to the invention are moved in relation to each other, one of them forwards and the other one backwards, the intermediate portion will move and/or pivot in relation to the wing portions. At the same time the wing portion moving forwards reveals under its rear edge a surface portion, which earlier was covered, and thus this revealed portion becomes a part of the wing surface of the wing structure on the side of the forwards moving wing portion. The shape of the revealed surface is such that it changes the hydrodynamic or aerodynamic properties of the wing structure's surface located on that side where the wing portion moved forwards. When thus for instance two convex wing portions are moved in relation to each other one surface will become more convex than the other surface. When the wing portions according to the invention are moved in relation to each other in the opposite direction, compared to the case above, then it results in a wing structure where the second surface is more convex than the first surface. In other words, by moving the wing portions it is possible to change the profile of the wing structure to become totally reversed.

The embodiments of the wing structure according to the invention comprise devices where the wing structure according to the invention is used for different purposes. Very advantageously the wing structure according to the invention can be used for steering various vehicles.

In some applications of the invention the shape of the wing structure can be actively forced to become a desired shape. Such applications comprise power means for moving the portions into a desired position. Such applications are for instance the keel, the rudder or the sail of a boat, or the wing of an aircraft. When the shape of the rudder is varied it will make the steering effect substantially more effective due to the changed hydrodynamics or aerodynamics. By varying the shape of the keel it is also possible to steer the boat, or for instance to correct the list of a sailboat. The structure according to the invention is simple and effective as a sail of a sailboat. By varying the profile of an aircraft wing according to the invention the aerodynamic properties of the wing can be changed effectively, for instance to control the buoyant force generated by the wing. The invention is applicable also for other purposes, for instance as air flow control devices in cars or as aircraft rudders. The fact that e.g. a keel according to the invention comprises a wing structure according to the invention means that at least part of the keel structure is in accordance with the invention, but it can also include other structures. For instance the lower part of the keel can be formed as a wing structure according to the invention while the upper part is a common keel, stationary fastened to the boat.

Some applications according to the invention can utilise the fact that a wing structure according to the invention can passively, automatically adapt itself to a position, which is advantageous regarding the aerodynamics. As a flipper the wing structure according to the invention can be fastened to the foot of a swimmer, for instance. Then, the wing structure can be easily arranged to be such that the water resistance against the flipper caused by the motion of the foot will automatically shift the wing portions in relation to each other so that the resistance between the wing structure and the water is maximised. Thus the wing structure according to the invention provides a kicking motion, which is more effective than with conventional flippers. In a thrust member of a watercraft, such as motorboat or a submarine, the wing structure can be used like a flipper, whereby the back and forth motion of the wing/provides an almost silent but effective thrust. The wing structure can be used to transform the kinetic energy of a moving medium, for instance in electrical power plants. Then the kinetic energy of for instance flowing water or air can be effectively recovered by letting the medium move a wing structure according to the invention. In the applications mentioned above it is also possible to actively change the shape of the wing structure.

The wing surfaces of the wing portions are typically arranged in a shape, where they are convex in directions away from each other. Typically the intermediate portion also has a convex surface. In one embodiment of the invention the first and second wing surfaces are substantially mirror images of each other in their cross-section. The external surface of the intermediate portion can also be symmetric. Thus, when the wing portions are arranged perfectly against each other, the whole wing structure has a cross-section, which is at least mainly symmetric. In other words, the opposite surfaces of the wing structure then have identical curvatures, because the intermediate portion presents an equal amount of curvature on both surfaces. The symmetric structure improves simplicity of the wing structure and thus a reliable operation. A symmetric wing structure receives or delivers an equal amount of kinetic energy in both directions of motion. A symmetric wing of this kind is particularly well applicable in many of the passive solutions mentioned above, as they are often moved in both directions in an alternating fashion.

### Brief description of the figures

The invention will be described in more detail below with reference to the enclosed schematic drawing, in which
Figure 1 shows the cross-section of a wing structure according to the invention;
Figure 2 shows the wing structure of figure 1 in a first extreme position;
Figure 3 shows the wing structure of figure 1 in a second extreme position;
Figure 4 shows a keel, a sail and a rudder according to the invention mounted in a boat;
Figure 5 shows a diver having flippers according to the invention;
Figure 6 shows a boat having a thrust member according to the invention as the mobility power source;
Figure 7 shows the operating principle of a power plant according to the invention;
Figure 8 shows an aircraft according to the invention;
Figure 9 shows the cross-section of a second wing structure according to the invention;
Figure 10 shows the cross-section of a third wing structure according to the invention; and
Figure 11 shows the cross-section of a fourth wing structure according to the invention.

### Detailed description of the examples in the figures

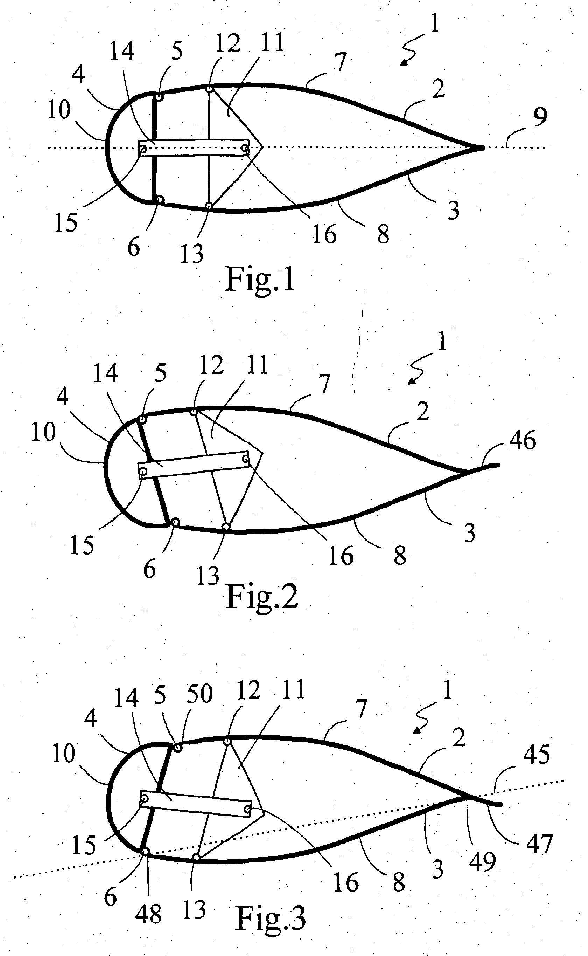

Figures 1 to 11 show wing structures according to the invention. All figures show the wing structure in a cross-section.

Figures 1 to 3 show a first embodiment of the wing structure 1 according to the invention and its operating principle. The wing structure 1 comprises a first wing portion 2, a second wing portion 3, and an intermediate portion 4. The wing portions 2 and 3 are attached to the intermediate portion 4 with the aid of hinges 5 and 6. The wing portions 2 and 3 have wing surfaces 7 and 8, which at the cross-section shown in the figures are mirror images of each other in relation to the axis of symmetry 9 drawn by a broken line. The intermediate portion 4 has an external surface 10, which is symmetric regarding the axis of symmetry 9. The wing portions 2 and 3 are connected to each other with a support body 11. The wing portions 2 and 3 and the support body 11 are pivotally attached to each other with the aid of hinges 12 and 13. The support body 11 and the intermediate portion 4 are connected to each other through a second support body 14. The support body 11 and the intermediate portion 4 are pivotally attached to each other with the aid of hinges 15 and 16.

Figure 2 shows the wing structure 1 of figure 1 as it is turned into a first extreme position. The first wing portion 2 is moved to the left in relation to the second wing portion 3. At the same time the intermediate portion 4 has turned. The rear portion of the first wing portion 2 uncovers a portion of the inner surface 46 of the rear end of the second wing surface, whereby the portion of the inner surface 46 now forms a part of the external surface of the lower surface of the wing structure. In the situation shown by figure 2 the lower surface of the wing is more convex than the upper surface.

Figure 3 shows the wing structure 1 of figure 3 when it is turned into the second extreme position. The first wing portion 2 is moved to the right in relation to the second wing portion 3. At the same time the intermediate portion 4 has turned. The rear end 49 of the second wing portion uncovers a portion of the inner surface 47 of the rear end of the first wing surface, whereby the portion of the inner surface 47 now forms a part of the external surface of the upper surface of the wing structure. In the situation shown by figure 3 the upper surface of the wing is more convex than the lower surface. Even if the wing structures 2 and 3 are pivoted in relation to the intermediate portion 4 the surface shape of the wing structure at their joints 48 and 50 is still substantially smooth or streamlined.

The cross-section in figure 3 shows the imaginary longitudinal axis 45 of the second wing portion 3, whereby the axis intersects the second wing portion 3 at its front edge point 48 and rear edge point 49.

The wing structure can be arranged to be suitable for many different purposes by varying the design of the components of the wing structure 1 and for instance the location of the hinges. Of course it is possible to arrange in many different ways the mechanisms comprised in the wing structure 1 enabling the motion of the wing portions 2 and 3 according to the invention. For instance, the figures 1 to 3 do not show power means, which can control the motion between the extreme positions of the wing structure. Within the wing structure 1 it is possible to arrange for instance hydraulic cylinders, which can move the wing portions 2 and 3 and the intermediate portion 4 in relation to each other.

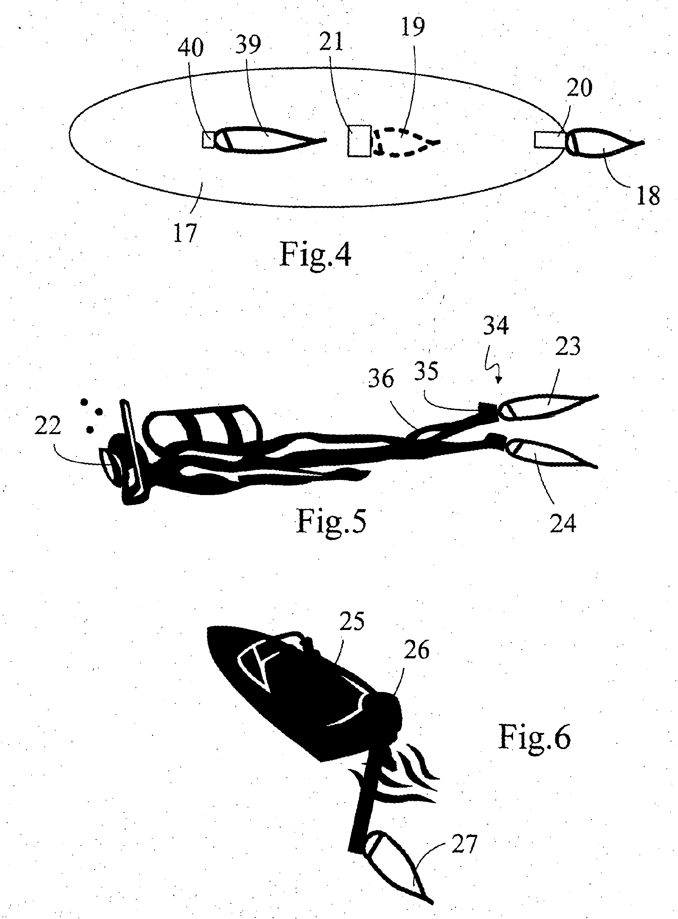

Figure 4 shows a boat 17 as seen from above. A rudder 18 formed by a wing structure according to the invention is located at the rear of the boat. More centrally in the boat 17 there is shown by broken lines a keel 19, which is located under the boat and which is formed by a wing structure according to the invention. The sail 39 is also formed by a wing structure according to the invention. The form of the rudder 18, the keel 19 and the sail 39 can thus be adjusted according to the invention. The structure according to the invention will considerably increase the steering effect of the rudder compared to a traditional rudder with a fixed structure. It is also possible to use the keel 19 according to the invention for steering the boat 17, in a manner like a rudder. By varying the shape of the keel 19 it is also possible to correct the list of the boat. This provides an advantage e.g. in a boat sailing in a strong wind. The variable shape of the sail 39 according to the invention enables a structure where it is not necessary to turn the mast or boom when changing the beating direction during beating to windward. Naturally, is still possible to arrange the rudder 18, the keel 19 and the sail 39 to rotate as entities around an axis. Figure 4 shows schematically also the power means 20, 21, and 40, with which the shape of the rudder 18, the keel 19 and the sail 39 is changed into a desired one.

Figure 5 shows a diver 22 having flippers 34 with wing structures 23 and 24 according to the invention, which passively vary their shape. The wing structures 23 and 24 are attached to the flipper's shoe portion 35, with which the flipper 34 is put on the foot 36. As the diver 22 moves the flippers up and down the wing structures will automatically vary their form due to the effect of the water resistance. The shape of the wing structures 23 and 24 will always change so that the resistance caused by the flipper will grow with the movement of the foot 36, and thus the thrust power caused by the foot to the diver 22 will be maximised.

Figure 6 shows a motor boat 25 having a power source or motor 26 arranged to sway the wing structure 27 according to the invention alternately up and down. The shape of the wing structure 27 will vary in the same manner as in the flippers 23, 24 of the diver 22 in figure 5. As a source of thrust power the wing structure 27 is silent, does not easily catch underwater nets or water vegetation, and will hardly damage fish.

If the wing structure 27 comprises means for actively changing it into a desired shape, and if it is arranged in the vertical direction so that the hinges 5 and 6 shown in figures 1 to 3 allow the wing structure 27 to be swayed in the transversal direction in relation to the boat's course, then it would also be possible to steer the boat 25 with the aid of the shape of the wing structure. A wing structure in an asymmetric position will cause an oblique thrust as it moves back and forth.

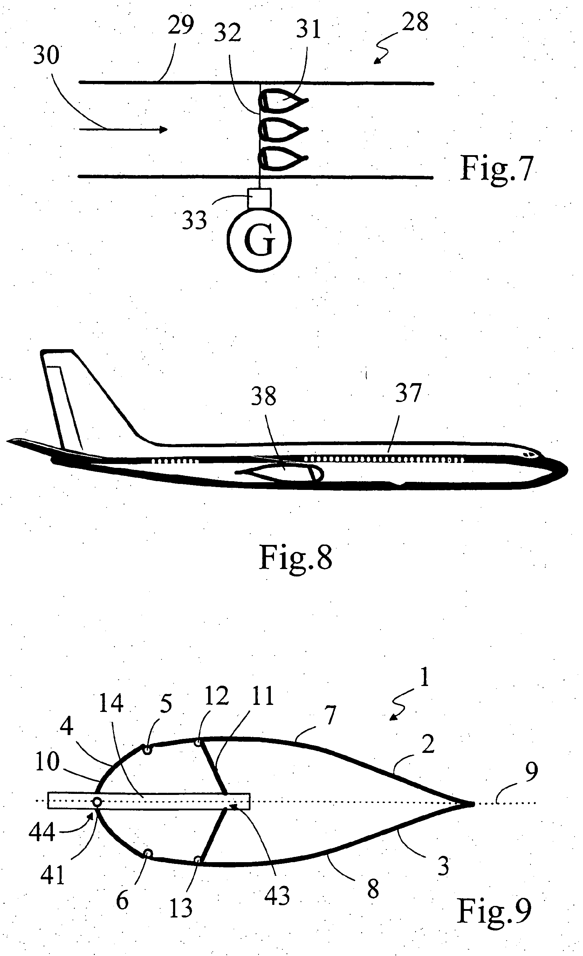

Figure 7 shows schematically a water or wind power plant 28. There the medium flow 30 directed to the tube 29 is directed to pass three wing structures 31 according to the invention. The wing structures 31 will sway due to the flow 30. All wing structures 31 are directed so that they will always sway in the same direction along the flow 30. The kinetic energy of the wing structures 31 is transferred, for instance through a bar 32 and gear 33 to a generator G generating electricity.

Figure 8 shows a passenger aircraft 37 with a wing 38, which at the cross section shown in the figure is a wing structure according to the invention. By changing the shape of the wing 38 it is possible to effectively influence the flying properties of the aircraft. Wing structures 1 according to the invention can be used also in other aircrafts than airplanes 37. It is possible that only a part of the aircraft's wing structure is realised with the wing structure according to the invention. The part of the wing, which is movable according to the invention, can be for instance only so large that the wing structure according to the invention can take care of the pivoting ailerons in traditional wings.

Figure 9 shows a second exemplary embodiment, which resembles the wing structure of figures 1 to 3. For the sake of clarity we use the same reference numerals for the corresponding components shown in figures 1 to 3. Now the support body 11 has a V-shaped cross-section. The second support body 14 is not hinged to the support body 11, but an opening 43 is formed at the apex of the V of the support body 11, whereby the second support body 14 is arranged in the opening 43 so that it can move in its longitudinal direction. The size of the opening 43 is advantageously such that while the wing structure moves the second support body 14 will pivot, supported by the opening 43, but cannot substantially move in other directions but its longitudinal direction. The second support body 14 is arranged through the intermediate portion 4 via an opening 44 in its central part. The support body 14 is hinged to the intermediate portion 4 at the opening 44. Via its second support body 14 the wing structure 1 can be fastened for instance to a flipper 34 fitting for instance on a diver's foot, whereby the wing structure operates as a passive wing structure similar to that mentioned above.

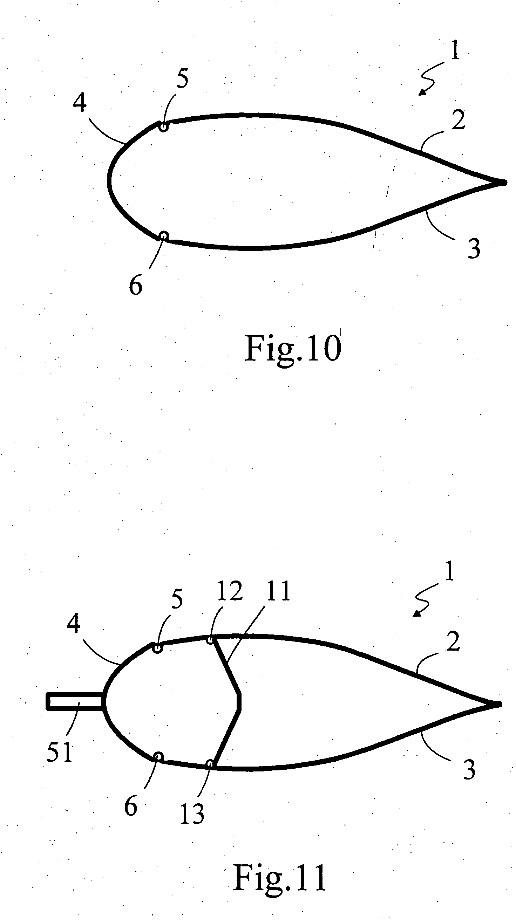

Figure 10 shows a very simple application of the wing structure 1 according to the invention. The wing structure comprises only wing portions 2 and 3, an intermediate portion 4 and hinges 5 and 6 interconnecting them.

Figure 11 shows a simple application of a wing structure 1 according to the invention. Compared to the wing structure of figure 10 there is an attachment bar 51 fastened centrally to the front edge of the intermediate portion 4, so that the wing structure 1 can be fastened to a desired place with the aid of this attachment bar. Further a support body 11 is fastened to the wing portions 2 and 3 via hinges 12 and 13, so that the mutual motion of the wing structure's components can be limited and controlled in a simple manner by this support body.

The figures show only cross-sections of wing structures according to the invention. None of the figures show the wing structure in its width direction. Regarding their length and width the wing structures can be of different size, according to their intended use. For instance, a wing structure according to the invention used as the sail of a boat or as a wing of an aircraft could be several metres wide and long. The wing structure of a flipper could be only a few centimetres long and wide.

The figures show only a few advantageous embodiment examples according to the invention. The figures do not expressly illustrate facts, which are known as such or obvious to a person skilled in the art, and which are secondary regarding the main idea of the invention. To a person skilled in the art it is obvious that the invention is not limited only to the examples presented above, but the invention may vary within the claims presented below. The dependent claims present some possible embodiments of the invention, and as such they should not be regarded as restricting the scope of the invention.

## Claims

1. A wing structure (1) comprising
- a first wing portion (2) having a first wing surface (7),
- a second wing portion (3) having a second wing surface (8), and
- an intermediate portion (4), to which the first (2) and second wing portions (3) are attached,
whereby the first (2) and second wing portions (3) have been arranged to be movable in relation to each other while supported by the intermediate portion (4) in order to vary the shape of the wing structure (1),
**characterised in that** the first (2) and second wing portions (3) have a substantially rigid structure and that the wing structure (1) further comprises
- a first hinge (5), with which the first wing portion (2) is pivotally attached to the intermediate portion (4), and
- a second hinge (6), with which the second wing portion (3) is pivotally attached to the intermediate portion (4).

2. A wing structure according to claim 1, **characterised in that** the first (7) and second wing surfaces (8) are substantially mirror images of each other in their cross-section.

3. A wing structure according to claim 2, **characterised in that** the intermediate portion (4) has a symmetrical external surface (10), so that the wing structure (1) has an at least mainly symmetric cross-section when the wing portions (2, 3) have been arranged totally against each other.

4. A wing structure according to any previous claim, **characterised in that** it comprises means (11 to 16) for providing a motion between the wing portions (2, 3) and the intermediate portion (4) into a desired direction.

5. A keel (19), which comprises a wing structure (1) according to claim 1.

6. A rudder (18), which comprises a wing structure (1) according to claim 1.

7. A sail (39), which comprises a wing structure (1) according to claim 1.

8. A flipper (34), which comprises a wing structure (23) according to claim 1 and means (35) for fastening the wing structure to a foot (36), hand or the like.

9. A thrust member of a watercraft (25), which member comprises a wing structure (27) according to claim 1, means for attaching the wing structure (27) to the watercraft (25) and to a power source (26), and means for transforming the power generated by the power source (26) into motion of the wing structure (27).

10. An aircraft (37), which comprises at least one wing structure (38) according to claim 1.

11. Equipment (28) for transforming kinetic energy of a medium, whereby the medium (30) is arranged to move a wing structure (31) according to claim 1, and whereby the equipment (28) further comprises means (32, 33, G) for receiving or for utilising the kinetic energy of the wing structure (31).

12. The use of a wing structure (1) according to claim 1 for steering a vehicle.
